# EUROPÄISCHE PATENTSCHRIFT

(11) **EP 2 158 247 B1**
(45) Veröffentlichungstag und Bekanntmachung des Hinweises auf die Patenterteilung: **13.03.2013**
(21) Anmeldenummer: 08760724.8
(22) Anmeldetag: 09.06.2008
(51) Int. Cl.: C08G 18/61, C08J 9/00, C08K 3/04

(54) **SILICONHALTIGER POLYURETHANSCHAUM**
POLYURETHANE FOAM CONTAINING SILICON
MOUSSE DE POLYURÉTHANNE CONTENANT DE LA SILICONE

(30) Priorität: 20.06.2007 DE 102007028253
(43) Veröffentlichungstag der Anmeldung: 03.03.2010
(73) Patentinhaber: Wacker Chemie AG, 81737 München (DE)
(72) Erfinder: CREMER, Jens, 81379 München (DE); STOWISCHEK, Klaus, 80798 München (DE)
(74) Vertreter: Budczinski, Angelika
(86) Internationale Anmeldenummer: PCT/EP2008/057159
(87) Internationale Veröffentlichungsnummer: WO 2008/155249

(56) Entgegenhaltungen:
- WO-A-01/25324
- WO-A-2004/056913
- GB-A- 2 400 370

## Beschreibung

Die Erfindung betrifft verschäumbare Zubereitungen auf der Basis von Organosiliciumverbindungen, die Aufblätterungsgraphit enthalten, siliconhaltige Polyurethanschäume sowie Verfahren zu deren Herstellung.

Polyurethanschäume sind bereits bekannt. Ein großes Problem von Polyurethanschäumen (PU-Schäume) ist ihre inhärente Brennbarkeit. Daher hat es in den letzten Jahrzehnten nicht an Versuchen gefehlt, die Flammverzögerungseigenschaften von Polymerschäumen zu verbessern. Neben dem Zusatz von halogen- oder phosphorhaltigen Flammschutzmittel wurde auch eine Vielzahl von anorganischen Füllstoffen, wie z.B. Aluminiumtrihydroxid, in die Polymermatrix der Schäume inkorporiert.

Eine weitere Methode zur Flammschutzausrüstung von PU-Schäumen ist die Verwendung von Aufblätterungsgraphit, welcher durch eine Volumenzunahme unter Hitzeeinwirkung die Oberfläche versiegelt und somit die Verbrennungsprozesse der darunter liegenden Polymatrix stark verlangsamt. Hierzu sei beispielsweise auf US-A 4,698,369 verwiesen. Nachteilig ist jedoch, dass meist erhebliche Mengen des Aufblätterungsgraphit notwendig sind, um einen relativ brandgeschützten PU-Schaum herzustellen, wodurch dessen mechanische Eigenschaften deutlich verschlechtert werden. Darüber hinaus kann so nur ein brandgehemmter und nie ein vollständig unbrennbarer PU-Schaum erhalten werden.

Ein völlig anderer Weg zu unbrennbaren PU-Weichschäumen wird mit den Silicon-Polyurethan-Weichschäumen beschritten. Hierbei wird z.B. die, in Standard-PU-Schäumen verwendete, gut brennbare Polyolkomponente durch nicht-brennbare OH-terminierte Siloxane ersetzt.

Durch den Einsatz von Silicon-Polyurethan-Copolymeren, d.h. von Polysiloxanen, die auch Polyurethan- und/oder Harnstoffeinheiten enthalten, ist es möglich, derartige unbrennbare Schaumstoffe zu entwickeln, die neue und auf die jeweilige Anwendung genau zugeschnittene Kombinationen von Eigenschaften aufweisen.

In DE-A 41 08 326 sind Siliconschaumstoffe beschrieben, die sich durch eine Reaktion von hydroxyalkylfunktionellen Polysiloxanen mit Di- oder Polyisocyanaten herstellen lassen.

In WO-A 03/080696 sind Siliconschaumstoffe beschrieben, die sich aus bestimmten hydroxyalkyl- und/oder aminoalkylfunktionellen Polysiloxanen mit Di- oder Polyisocyanaten herstellen lassen.

Obwohl alle so erhaltene Silicon-Polyurethanschäume das gemeinsame Merkmal der Unbrennbarkeit aufweisen, neigen sie dennoch zum starken Tropfen unter Hitzeeinwirkung.

Gegenstand der Erfindung sind verschäumbare Zubereitungen, die (A) Organopolysiloxan mit mindestens einer Isocyanatgruppe und (B) Aufblätterungsgraphit enthalten.

Im Rahmen der vorliegenden Erfindung sollen von dem Begriff Organopolysiloxane sowohl polymere, oligomere wie auch dimere Siloxane mitumfasst werden.

Bevorzugt handelt es sich bei den erfindungsgemäß eingesetzten Siloxanen (A) um solche enthaltend Einheiten der Formel

RₐR¹_{b}(R²O) _{c}SiO_{4-a-b-c/2} (I),

wobei
R gleich oder verschieden sein kann und einen einwertigen, SiCgebundenen, gegebenenfalls substituierten Kohlenwasserstoffrest, der durch Sauerstoffatome unterbrochen sein kann, bedeutet,
R¹ gleich oder verschieden sein kann und einen einwertigen, gegebenenfalls substituierten Kohlenwasserstoffrest mit mindestens einer Isocyanatgruppe, der durch Heteroatome unterbrochen sein kann, bedeutet,
R² gleich oder verschieden sein kann und einen einwertigen, gegebenenfalls substituierten Kohlenwasserstoffrest, der durch Heteroatome unterbrochen sein kann, bedeutet,
a 0, 1, 2 oder 3 ist,
b 0, 1, 2 oder 3 ist und
c 0, 1, 2 oder 3 ist,
mit der Maßgabe, dass die Summe a+b+c≤3 ist und mindestens eine Einheit mit b verschieden 0 anwesend ist.

Beispiele für R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcycl hexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α-und der β-Phenylethylrest.

Bevorzugt handelt es sich bei Rest R um einwertige, gegebenenfalls substituierte Kohlenwasserstoffreste mit 1 bis 40 Kohlenstoffatomen, besonders bevorzugt um Kohlenwasserstoffreste mit 1 bis 30 Kohlenstoffatomen, insbesondere um Kohlenwasserstoffreste mit 1 bis 6 Kohlenstoffatomen.

Bevorzugt handelt es sich bei Rest R¹ um solche der Formel

-Y-A-C(O)-NH-Z-NCO (II),

wobei
Y und Z unabhängig voneinander zweiwertige, gegebenenfalls substituierte Kohlenwasserstoffreste, die mit Heteroatomen unterbrochen sein können, bedeuten und
A die Bedeutung von -O- oder -NR³- hat mit R³ gleich Wasserstoffatom oder einwertiger, gegebenenfalls substituierter Kohlenwasserstoffrest.

Bevorzugt handelt es sich bei Rest R³ um Wasserstoffatom.

Bevorzugt handelt es sich bei Rest A um den Rest -NR³- mit R³ gleich der obengenannten Bedeutung.

Bevorzugt handelt es sich bei Y um zweiwertige, aliphatische, gegebenenfalls mit -NCO substituierte Kohlenwasserstoffreste, besonders bevorzugt um Propylen- und Methyloxyethylenreste, insbesondere um Propylenreste.

Bevorzugt handelt es sich bei Z um zweiwertige, aromatische, gegebenenfalls mit -NCO substituierte Kohlenwasserstoffreste, besonders bevorzugt um Toluolylen- und Methylen-bis-phenylenreste, insbesondere um Toluolylenreste.

Beispiele für Rest R² sind die für Rest R angegebenen Beispiele.

Der Wert von a ist bevorzugt 2.

Der Wert von b ist bevorzugt 0 oder 1.

Der Wert von c ist bevorzugt 0.

Bei den erfindungsgemäß eingesetzten Siloxanen (A) handelt es sich bevorzugt um verzweigte und lineare Siloxane, insbesondere um im Wesentlichen lineare Siloxane.

Besonders bevorzugt handelt es sich bei den Siloxanen (A) um solche, die aus Einheiten der Formel (I) bestehen.

Die erfindungsgemäß eingesetzten Siloxane (A) haben einen Isocyanat-Gehalt von bevorzugt 0,1 bis 20 Gew.-%, besonders bevorzugt 0,1 bis 10 Gew.-%.

Die erfindungsgemäß eingesetzten Siloxane (A) haben eine Viskosität von bevorzugt 10 bis 10 000 mPas, besonders bevorzugt 50 bis 500 mPas, jeweils bei 25°C.

Die erfindungsgemäß eingesetzten Siloxane (A) sind handelsübliche Produkte bzw. können nach in der Siliciumchemie gängigen Verfahren hergestellt werden.

Bevorzugt werden die erfindungsgemäß eingesetzten Siloxane (A) durch Umsetzung von α,ω-aminoalkylfunktionalisierten und/oder α,ω-hydroxyfunktionalisierten Siloxanen (A1) mit Polyisocyanaten hergestellt.

Bei der Umsetzung der Siloxane (A1) mit den Polyisocyanaten werden die Polyisocyanate vorzugsweise in einem Überschuss verwendet, so dass pro Mol Aminoalkylreste bzw. hydroxyfunktionelle Reste der Organopolysiloxane (A1) mindestens 1 Mol, insbesondere 2 bis 10 Mol, Isocyanateinheiten eingesetzt werden. Der molare Überschuss an Isocyanaten wird vorzugsweise bei der Schaumbildung für die Umsetzung mit Wasser verbraucht.

Aufblätterungsgraphit im Sinne der vorliegenden Erfindung ist Graphit, der ein oder mehrere Aufblätterungsmittel enthält. Aufblätterungsgraphit wird hergestellt durch in der Technik bekannte Verfahren. Im Allgemeinen wird Graphit zuerst mit Oxidationsmitteln, wie etwa Nitraten, Chromaten, Peroxiden oder durch Elektrolyse modifiziert, um die Kristallschicht zu öffnen, und dann werden Nitrate oder Sulfate innerhalb des Graphits interkaliert bzw. eingelagert. Unter Hitzeeinwirkung werden die Schichten des Aufblätterungsgraphits durch Thermolyse auseinandergetrieben. Die Temperatur, bei der die Expansion einsetzt, wird Starttemperatur genannt und hängt von der Aufblätterungsgraphitsorte ab. Die Volumenzunahme unter Hitzeeinwirkung wird Expansionsrate genannt und ist sowohl von der Aufblätterungsgraphitsorte als auch von der einwirkenden Temperatur abhängig und nimmt im Allgemeinen mit steigender Temperatur zu.

Der erfindungsgemäß eingesetzte Aufblätterungsgraphit (B) weist eine Expansionsrate von bevorzugt 50 bis 500 cm³/g, besonders bevorzugt 100 bis 400 cm³/g, jeweils bei 1000°C, auf.

Bei dem erfindungsgemäß eingesetzten Aufblätterungsgraphit (B) liegt die Starttemperatur im Bereich von bevorzugt 150 bis 300°C, besonders bevorzugt 180 bis 250°C.

Der erfindungsgemäß eingesetzte Aufblätterungsgraphit (B) weist einen Kohlenstoffgehalt von bevorzugt 85 bis 99,9 Gew.-%, besonders von 90 bis 99,9 Gew.-%, insbesondere von 95 bis 99 Gew.-%, auf.

Der erfindungsgemäß eingesetzte Aufblätterungsgraphit (B) weist eine Korngröße von bevorzugt 0,05 bis 0,3 mm, besonders bevorzugt 0,1 bis 0,25 mm, auf.

Der erfindungsgemäß eingesetzte Aufblätterungsgraphit (B) weist einen Aschewert von bevorzugt 0,01 bis 5 Gew.-%, besonders bevorzugt 0,1 bis 2 Gew.-%, auf.

Der erfindungsgemäß eingesetzte Aufblätterungsgraphit (B) weist einen Feuchtegehalt von bevorzugt 0,01 bis 2 Gew.-%, besonders bevorzugt 0,1 bis 1 Gew.-%, auf.

Die erfindungsgemäßen Zubereitungen enthalten Aufblätterungsgraphit (B) in Mengen von bevorzugt 0,1 bis 50 Gewichtsteilen, besonders bevorzugt 0,1 bis 25 Gewichtsteilen, insbesondere 0,1 bis 15 Gewichtsteilen, jeweils bezogen auf 100 Gewichtsteile Siloxan (A).

Zusätzlich zu den Siloxanen (A) und Aufblätterungsgraphit (B) können die erfindungsgemäßen Zubereitungen weitere Stoffe enthalten, wie z.B. Isocyanate (C), Füllstoffe (D), Emulgatoren (E), physikalische Treibmittel (F), Katalysatoren (G), chemische Treibmittel (H) und Additive (I).

Als gegebenenfalls eingesetzte Isocyanate (C) können sämtliche bekannten Di- oder Polyisocyanate eingesetzt werden.

Bevorzugt werden Polyisocyanate (C) der allgemeinen Formel

Q(NCO)ₙ (III),

eingesetzt, wobei
- **Q**: einen n-funktionellen, gegebenenfalls substituierten Kohlenwasserstoffrest und
- **n**: eine ganze Zahl von mindestens 2, bevorzugt von 2 bis 10, besonders bevorzugt 2 oder 3, insbesondere 2, bedeutet.

Vorzugsweise handelt es sich bei Q um gegebenenfalls substituierte Kohlenwasserstoffreste mit 4 bis 30 Kohlenstoffatomen, besonders bevorzugt um Kohlenwasserstoffreste mit 6 bis 15 Kohlenstoffatomen.

Beispiele für Diisocyanate (C) sind Diisocyanatodiphenylmethan (MDI), sowohl in Form von rohem oder technischem MDI als auch in Form reiner 4,4'- bzw. 2,4'-Isomeren oder deren Zubereitungen, Tolylendiisocyanat (TDI) in Form seiner verschiedenen Regioisomeren, Diisocyanatonaphthalin (NDI), Isophorondiisocyanat (IPDI), 1,3-Bis(1-isocyanato-1-methylethyl)benzene (TMXDI) oder auch von Hexamethylendiisocyanat (HDI). Beispiele für Polyisocyanate (C) sind polymeres MDI (*p*-MDI), Triphenylmethantriisocyanat oder Biuret- oder Isocyanurattrimerisate der oben genannten Isocyanate. Die Di- und/oder Polyisocyanate (C) können allein oder im Gemisch eingesetzt werden.

Besonders bevorzugt handelt es sich bei den gegebenenfalls eingesetzten Isocyanaten (C) um solche der Formel

OCN-Z'-NCO (IV),

wobei Z' eine für Z oben genannte Bedeutung hat.

Insbesondere handelt es sich bei den Isocyanaten (C) um die gleichen, die bei der Herstellung der Siloxane (A) verwendet werden. Dabei kann, falls erwünscht, bei der Herstellung der Siloxane (A) Isocyanat gleich im Überschuss eingesetzt und die so erhaltene Mischung vorteilhafterweise zur Herstellung der erfindungsgemäßen Zubereitung gleich weiterverwendet werden.

Falls die erfindungsgemäßen Zubereitungen Isocyanate (C) enthalten, handelt es sich um Mengen von bevorzugt 0,1 bis 50 Gewichtsteilen, besonders bevorzugt 0,1 bis 40 Gewichtsteilen, insbesondere 0,1 bis 30 Gewichtsteilen, jeweils bezogen auf 100 Gewichtsteile Siloxan (A).

Die erfindungsgemäßen Zubereitungen enthalten bevorzugt Isocyanate (C).

Falls Füllstoffe (D) eingesetzt werden, kann es sich um sämtliche nicht verstärkende Füllstoffe, also Füllstoffe mit einer BET-Oberfläche von bis zu 50 m²/g, wie Kreide, oder verstärkende Füllstoffe, also Füllstoffe mit einer BET-Oberfläche von mindestens 50 m²/g, wie Ruß, gefällte Kieselsäure oder pyrogene Kieselsäure, handeln. Insbesondere hydrophobe wie auch hydrophile pyrogene Kieselsäuren stellen dabei einen bevorzugten Füllstoff dar. In einer besonders bevorzugten Ausführungsform der Erfindung wird eine hydrophobe pyrogene Kieselsäure eingesetzt, deren Oberfläche mit Trimethylsilylgruppen modifiziert worden ist. Die eingesetzten Füllstoffe (D) - insbesondere pyrogene Kieselsäuren - können dabei verschiedene Funktionen wahrnehmen. So können sie zur Einstellung der Viskosität der verschäumbaren Mischung verwendet werden. Vor allem aber können sie während der Verschäumung eine "Stützfunktion" wahrnehmen und so zu Schäumen mit besserer Schaumstruktur führen. Schließlich können auch die mechanischen Eigenschaften der resultierenden Schäume durch den Einsatz von Füllstoffen (D) - insbesondere durch den Einsatz von pyrogener Kieselsäure - entscheidend verbessert werden.

Falls die erfindungsgemäßen Zubereitungen Füllstoffe (D) enthalten, handelt es sich um Mengen von bevorzugt 0,1 bis 30 Gewichtsteilen, besonders bevorzugt 0,1 bis 20 Gewichtsteilen, insbesondere 0,1 bis 15 Gewichtsteilen, jeweils bezogen auf 100 Gewichtsteile Siloxan (A).

Die erfindungsgemäßen Zubereitungen enthalten bevorzugt Füllstoffe (D).

In vielen Fällen ist es von Vorteil, den schäumbaren Zubereitungen Emulgatoren (E) zuzugeben. Als geeignete Emulgatoren (E), die auch als Schaumstabilisatoren dienen, können beispielsweise alle handelsüblichen durch Polyetherseitenketten modifizierten Siliconoligomere eingesetzt werden, die auch zur Herstellung von herkömmlichen Polyurethanschäumen eingesetzt werden.

Falls Emulgatoren (E) eingesetzt werden, handelt es sich um Menger, von beverzugt bis zu 6 Gew.-%, besonders bevorzugt von 0,3 bis 3 Gew.-%, jeweils bezogen auf das Gesamtgewicht der schaumbaren Zubereitungen.

Die erfindungsgemäßen Zubereitungen enthalten bevorzugt Emulgatoren (E).

Zudem konnen die Zubereitungen auch Verbindungen (F) enthalten, die als physikalische Treibmittel dienen können. Als Bestandteil (F) werden bevorzugt niedermolekulare Kohlenwasserstoffe wie z.B. Propan, Butan oder Cyclopentan, Dimethylether, fluorierte Kohlenwasserstoffe wie 1,1-Difluorethan oder 1,1,1,2-Tetrafluorethan oder CO₂ verwendet. Die Schaumherstellung kann dabei gegebenenfalls ausschließlich durch die physikalischen Treibmittel (F) erfolgen. Meist allerdings erfolgt die Schaumbildung vor allem durch eine Reaktion der isocyanatfunktionellen Siloxane mit der Komponente (H) als chemischem Treibmittel. Doch auch in diesem Fall kann ein Einsatz physikalischer Treibmittel (F) in Kombination mit Bestandteil (H) als chemischem Treibmittel vorteilhaft sein, um so zu Schäumen mit geringerer Dichte zu gelangen.

Falls die erfindungsgemäßen Zubereitungen Bestandteil (F) enthalten, handelt es sich um Mengen von bevorzugt 0,1 bis 30 Gewichtsteilen, besonders bevorzugt 0,1 bis 20 Gewichtsteilen, insbesondere 0,1 bis 15 Gewichtsteile, jeweils bezogen auf 100 Gewichtsteile Siloxan (A).

Die erfindungsgemäßen Zubereitungen enthalten bevorzugt kein physikalisches Treibmittel (F).

Des Weiteren können die erfindungsgemäßen schäumbaren Zubereitungen Katalysatoren (G) enthalten, die die Schaumhärtung beschleunigen. Als Katalysatoren (G) sind u.a. Organozinnverbindungen geeignet. Beispiele sind Dibutylzinndilaurat, Dioctylzinndilaurat, Dibutylzinndiacetat, Dibutylzinndioctoat oder Di-butylzinn-bis-(dodecylmercaptid). Zudem kommen auch zinnfreie Katalysatoren (G) z.B. organische Titanate, Eisenkatalysatoren, wie organische Eisenverbindungen, organische und anorganische Schwermetallverbindungen oder Amine in Frage. Als Beispiel für eine organische Eisenverbindung sei Eisen(III)acetylacetonat genannt. Beispiele für Amine sind Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethyl-phenlyamin, Bis-N,N-dimethylaminoethylether, N,N-Dimethyl-2-aminoethanol, N,N-Dimethylaminopyridin, N,N,N,N-Tetramethyl-bis-(2-Aminoethyl)methylamin, 1,5-Diazabicyclo[4.3.0]non-5-en, 1,8-Diazabicyclo[5.4.0]undec-7-en, N-Ethylmorpholin oder N,N'-Dimethylaminopyridin.

Die Katalysatoren (G) können einzeln oder als Gemisch eingesetzt werden. Gegebenenfalls können die bei der Herstellung der Siloxane (A) eingesetzten Katalysatoren gleichzeitig auch als Katalysatoren (G) zur Schaumhärtung dienen.

Falls Katalysator (G) eingesetzt wird, handelt es sich um Mengen von bevorzugt 0,1 bis 6,0 Gew.-%, besonders bevorzugt von 0,3 von 4,0 Gew.-%, jeweils bezogen auf das Gesamtgewicht der erfindungsgemäßen schäumbaren Zubereitung.

Die erfindungsgemäßen Zubereitungen enthalten bevorzugt Katalysatoren (G).

Als chemische Treibmittel (H) können prinzipiell sowohl Wasser wie auch sämtliche Verbindungen mit bevorzugt mindestens einer gegenüber Isocyanat reaktiven Funktion dienen.

Beispiele für Bestandteil (H) sind aminoalkyl- oder hydroxyfunktionelle Siloxane (A1), monomere Alkohole, monomere Diole wie Glycol, Propandiol, Butandiol, monomere Oligoole wie Pentaerythrit oder Trihydroxymehtylethan, oligomere oder polymere Alkohole mit einer, zwei oder mehreren Hydroxylgruppen wie Etylen- oder Propylenglykole, Wasser, monomere Aminen mit einer, zwei oder mehreren Aminfunktionen wie Etylendiamin, Hexamethylendiamin sowie auch oligomere oder polymere Amine mit einer, zwei oder mehreren Aminfunktionen.

Falls Bestandteil (H) eingesetzt wird, handelt es sich bevorzugt um Hydroxyverbindungen, wobei Wasser besonders bevorzugt ist.

Vorzugsweise enthalten die erfindungsgemäßen Zusammensetzungen Bestandteil (H).

Die erfindungsgemäßen Zubereitungen enthalten Bestandteil (H) in Mengen von bevorzugt 0,1 bis 20 Gewichtsteilen, besonders bevorzugt von 0,1 bis 15 Gewichtsteilen, insbesondere von 0,1 bis 10 Gewichtsteilen, jeweils bezogen auf 100 Gewichtsteile Siloxan (A).

Weiterhin kann als Additive (I) auch der Zusatz von Zellregulantien, Thixotropiermitteln und/oder Weichmachern vorteilhaft sein. Zur weiteren Verbesserung der Brandbeständigkeit können den schäumbaren Zubereitungen zudem Flammschutzmittel zugesetzt werden, z.B. phosphorhaltige Verbindungen, vor allem Phosphate und Phosphonate, sowie auch halogenierte Polyester und Polyole oder Chlorparaffine.

Falls Additive (I) eingesetzt werden, handelt es sich um Mengen von bevorzugt 0,1 bis 30 Gewichtsteilen, besonders bevorzugt von 0,1 bis 20 Gewichtsteilen, insbesondere von 0,1 bis 15 Gewichtsteilen, jeweils bezogen auf 100 Gewichtsteile Siloxan (A).

Die erfindungsgemäßen Zubereitungen enthalten bevorzugt keine Additive (I).

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Zubereitungen um solche enthaltend
(A) Siloxane enthaltend Einheiten der Formel (I),
(B) Aufblätterungsgraphit,
   gegebenenfalls
(C) Isocyanate,
   gegebenenfalls
(D) Füllstoffe,
   gegebenenfalls
(E) Emulgatoren,
   gegebenenfalls
(F) physikalische Treibmittel,
   gegebenenfalls
(G) Katalysatoren,
(H) chemische Treibmittel und
   gegebenenfalls
(I) Additive.

Die erfindungsgemäßen Zubereitungen enthalten außer der Komponenten (A), (B) sowie gegebenenfalls einem oder mehreren der Komponenten (C) bis (I) bevorzugt keine weiteren Bestandteile.

Die erfindungsgemäßen Zubereitungen können nun nach beliebigen und an sich bekannten Verfahren, wie einfaches Vermischen, hergestellt werden, wobei auch Vormischungen einzelner Bestandteile hergestellt werden können. Dabei können 1-komponentige Systeme wie auch 2-komponentige Systeme hergestellt werden.

Werden die erfindungsgemäßen Zubereitungen in Form von 2-komponentigen Systemen bereitgestellt, was bevorzugt ist, so können die beiden Komponenten der erfindungsgemäßen verschäumbaren Zubereitung alle Bestandteile in beliebigen Kombinationen und Mengenverhältnissen enthalten, mit der Maßgabe, dass eine Komponente nicht gleichzeitig die Bestandteile (A) und (H) enthält.

So wird z.B. zur Herstellung der erfindungsgemäßen Zubereitung bevorzugt eine Mischung enthaltend Bestandteil (A), Bestandteil (B), gegebenenfalls Bestandteil (C), gegebenenfalls Bestandteil (D), gegebenenfalls Bestandteil (F) und gegebenenfalls Bestandteil (I) als Komponente 1 zubereitet sowie eine Komponente 2 enthaltend Bestandteil (H), gegebenenfalls Bestandteil (E) und gegebenenfalls Bestandteil (G), die dann zur Herstellung des erfindungsgemäßen Schaumes miteinander vermischt werden.

Es können jedoch auch - falls erwünscht - zur Herstellung der erfindungsgemäßen Zubereitung alle Bestandteile in einem Schritt miteinander vermischt werden. Bei diesen 1-komponentigen Systemen erfolgt die Schaumbildung dann bevorzugt durch Einsatz eines physikalischen Treibmittels (F). Nach dem Aufbringen des Schaums härtet dieser dann durch die Reaktion mit Luftfeuchtigkeit gleich aus.

Die erfindungsgemäßen Zubereitungen sind bevorzugt flüssig bis zähviskos und haben eine Viskosität von bevorzugt 500 bis 20 000 mPas, besonders bevorzugt 1 000 bis 10 000 mPas.

Die erfindungsgemäßen Zubereitungen dienen bevorzugt zur Herstellung von Schäumen, besonders bevorzugt von Hart- oder Weichschäumen, insbesondere von Weichschäumen.

Ein weiterer Gegenstand der vorliegenden Erfindung ist ein Verfahren zur Herstellung siliconhaltiger Polyurethanschäume, dadurch gekennzeichnet, dass Organopolysiloxan mit mindestens einer Isocyanatgruppe (A) mit Aufblätterungsgraphit (B) und chemischem Treibmittel (H) vermischt und reagieren gelassen wird.

In einer bevorzugten Ausführungsform des erfindungsgemäßen Verfahrens werden Organopolysiloxan mit mindestens einer Isocyanatgruppe (A), Aufblätterungsgraphit (B), Katalysator (G) und chemisches Treibmittel (H) vermischt und reagieren gelassen.

Das erfindungsgemäße Verfahren wird bei Temperaturen von bevorzugt 0 bis 100°C, besonders bevorzugt 10 bis 40°C, insbesondere 15 bis 30°C, durchgeführt.

Das erfindungsgemäße Verfahren wird bevorzugt beim Druck der umgebenden Atmosphäre, also etwa 900 bis 1100 hPa, durchgeführt.

Bei dem erfindungsgemäßen Verfahren wird bevorzugt CO₂ freigesetzt, das größtenteils für den Aufbau der erfindungsgemäßen Schaumstruktur verantwortlich ist.

Ein weiterer Gegenstand der vorliegenden Erfindung sind siliconhaltige Polyurethanschäume, die Aufblätterungsgraphit (B) enthalten.

Die erfindungsgemäßen Schäume enthalten Aufblätterungsgraphit in Mengen von bevorzugt 0,05 bis 30 Gew.-%, besonders bevorzugt von 0,1 bis 20 Gew.-%, insbesondere von 0,1 bis 15 Gew.-%, jeweils bezogen auf das Gesamtgewicht des Schaumes.

Die erfindungsgemäßen Schäume zeichnen sich durch eine feine, offenzellige Schaumstruktur aus. Ihre mechanischen Eigenschaften entsprechen denen kommerziell verfügbarer PU-Schäume.

Die erfindungsgemäßen Schäume weisen eine Dichte von bevorzugt 50 bis 500 kg/m³, besonders bevorzugt 50 bis 200 kg/m³, insbesondere 50 bis 120 kg/m³, auf.

Die erfindungsgemäßen Schäume können überall dort eingesetzt werden, wo auch bisher Polyurethanschäume eingesetzt worden sind. Insbesondere eignen sie sich für Polsterungen, Wärme- und Geräuschisolierungen.

Die erfindungsgemäßen verschäumbaren Zubereitungen haben den Vorteil, dass sie auf sehr einfache Weise und mit den bisher bekannten Methoden aus der PU-Technologie verarbeitet werden können.

Des Weiteren haben die erfindungsgemäßen Zubereitungen den Vorteil, dass sie mit kommerziell leicht verfügbaren Edukten hergestellt werden können.

Ferner haben die erfindungsgemäßen Zubereitungen den Vorteil, dass die leicht verarbeitbar sind und niedrigviskos hergestellt werden können.

Das erfindungsgemaße Verfahren zur Herstellung von siliconhaltigen PU-Schäumen hat den Vorteil, dass es einfach in der Durchführung ist.

Die erfindungsgemäßen Schäume haben den Vorteil, dass sie unter extremer Hitzeeinwirkung nicht zum Tropfen neigen.

Des Weiteren haben die erfindungsgemäßen Schäume den Vorteil, dass sie äußerst schwer entflammbar sind.

Die erfindungsgemäßen Schäume haben den Vorteil, dass die Inkorporation nur geringer Mengen des Aufblätterungsgraphits in die Polymermatrix des Silicon-PU-Schaumes die, während der Hitzeeinwirkung, z.B. bei Temperaturen über 140°C, verflüssigte Polymerkomponente bindet und so ein Tropfen des Schaums verhindert.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Vergleichsbeispiel 1

### Herstellung der Vormischung 1

50,00 g eines linearen Organopolysiloxans der Formel H₂N-(CH₂)₃-[(CH₃)₂-SiO]₁₂₉Si(CH₃)₂-(CH₂)₃-NH₂ gelöst in einem Gemisch aus 25 ml absolutem Aceton und 25 ml absolutem Dichlormethan wurden langsam zu einer Lösung von Tolylendiisocyanat (TDI) (4,3 g in 20 ml absolutem Aceton) zugetropft und so bei 0°C zur Reaktion gebracht, wobei die Aminogruppen vollständig abreagieren.

Das so erhaltene Reaktionsgemisch, welches neben 51,7 g Isocyanatosiloxan OCN-(CH₂)₃-[(CH₃)₂-SiO]₁₂₉Si(CH₃)₂-(CH₂)₃-NCO noch 2,6 g TDI enthält, wurde dann auf Raumtemperatur erwärmt und bei einem Druck von 10 mbar vom Lösungsmittel befreit.

10,00 g der so erhaltenen Vormischung 1 wurden mit 0,16 g Bis-(2-dimethylaminoethyl)ether (käuflich erhältlich unter der Bezeichnung "Jeffcat® ZF-20" von Huntsman Corp., D-Hamburg) als Katalysator und 0,15 g Emulgator (käuflich erhältlich unter der Bezeichnung Belsil® DMC 3071VP bei Wacker Chemie AG, D-München) versetzt. Das so erhaltene Gemisch wurde zunächst mit einem schnelllaufenden KPG-Rührer zu einer homogenen Emulsion verarbeitet. Anschließend wurden 0,14 g Wasser schnell zugegeben und wieder durch einen schnelllaufenden KPG-Rührer zu einer homogenen Mischung emulgiert. Nach ca. 5 Sekunden setzte eine exotherme Reaktion mit Schaumentwicklung ein. Die Schaumbildung war nach weiteren ca. 20 Sekunden abgeschlossen, während die Wärmeentwicklung noch ca. 30 Sekunden anhielt. Es resultierte ein farbloser, flexibler, unbrennbarer Weichschaum, welcher in der Bunsenbrennerflamme zum starken Tropfen neigte. Dabei wurde beobachtet, dass sich der Weichschaum an der Auftreffstelle der Bunsenbrennerflamme sofort verflüssigte und die dort so gebildete niedrigviskose Siliconmasse direkt zu Boden tropfte.

### Beispiel 1

### Herstellung der Vormischung 2

50,00 g eines linearen Organopolysiloxans der Formel H₂N-(CH₂)₃-[(CH₃)₂-SiO]₁₂₉Si(CH₃)₂-(CH₂)₃-NH₂ gelöst in einem Gemisch aus 25 ml absolutem Aceton und 25 ml absolutem Dichlormethan wurden langsam zu einer Lösung von Tolylendiisocyanat (TDI) (4,3 g in 20 ml absolutem Aceton) zugetropft und so bei 0°C zur Reaktion gebracht, wobei die Aminogruppen vollständig abreagieren.

Das so erhaltene Reaktionsgemisch, welches neben 51,7 g Isocyanatosiloxan OCN-(CH₂)₃-[(CH₃)₂-SiO]₁₂₉Si(CH₃)₂-(CH₂)₃-NCO noch 2,6 g TDI enthalt, wurde dann auf Raumtemperatur erwärmt und weitere zwei Stunden gerührt, bevor 4,9 g eines Aufblätterungsgraphits (käuflich erhältlich unter der Bezeichnung "EX-EF-80 SC" bei der NGS Naturgraphit GmbH, D-Leinburg) in die Lösung dispergiert worden sind. Im Anschluss daran wurde die Vormischung 2 bei einem Druck von 10 mbar vom Lösungsmittel befreit.

10,00 g der so erhaltenen Vormischung 2 wurden mit 0,16 g Bis-(2-dimethylaminoethyl)ether (käuflich erhältlich unter der Bezeichnung "Jeffcat® ZF-20" von Huntsman Corp., D-Hamburg) als Katalysator und 0,15 g Emulgator (käuflich erhältlich unter der Bezeichnung Belsil® DMC 3071VP bei Wacker Chemie AG, D-München) versetzt. Das so erhaltene Gemisch wurde zunächst mit einem schnelllaufenden KPG-Rührer zu einer homogenen Emulsion verarbeitet. Anschließend wurden 0,14 g Wasser schnell zugegeben und wieder durch einen schnelllaufenden KPG-Rührer zu einer homogenen Mischung emulgiert. Nach ca. 5 Sekunden setzte eine exotherme Reaktion mit Schaumentwicklung ein. Die Schaumbildung war nach weiteren ca. 20 Sekunden abgeschlossen, während die Wärmeentwicklung noch ca. 30 Sekunden anhielt. Es resultierte ein grau-farbener, flexibler Weichschaum, welcher sich in der Bunsenbrennerflamme als nicht brennbar und vollständig tropfenfrei erwies. Beim Einwirken der Bunsenbrennerflamme auf den Weichschaum war an der Auftreffstelle eine deutliche Volumenzunahme zu beobachten, die gleichzeitig eine Verfestigung der Siliconmasse zur Folge hatte, wodurch ein Abtropfen unterbunden worden ist.

### Beispiel 2

### Herstellung der Vormischung 3

50,00 g eines linearen Organopolysiloxans der Formel H₂N-(CH₂)₃-[(CH₃)₂-SiO]₁₂₉Si(CH₃)₂-(CH₂)₃-NH₂ gelöst in einem Gemisch aus 25 ml absolutem Aceton und 25 ml absolutem Dichlormethan wurden langsam zu einer Lösung von Tolylendiisocyanat (TDI) (4,30 g in 20 ml absolutem Aceton) zugetropft und so bei 0°C zur Reaktion gebracht, wobei die Aminogruppen vollständig abreagieren.

Das so erhaltene Reaktionsgemisch, welches neben 51,7 g Isocyanatosiloxan OCN-(CH₂)₃-[(CH₃)₂-SiO]₁₂₉Si(CH₃)₂-(CH₂)₃-NCO noch 2,69 g TDI enthält, wurde dann auf Raumtemperatur erwärmt und weitere zwei Stunden gerührt, bevor 2,45 g eines Aufblätterungsgraphits (käuflich erhältlich unter der Bezeichnung "EX 180 SC" bei der NGS Naturgraphit GmbH, D-Leinburg) in die Lösung dispergiert worden sind. Im Anschluss daran wurde die Vormischung 3 bei einem Druck von 10 mbar vom Lösungsmittel befreit.

Mit 10,00 g der so erhaltenen Vormischung 3 wurde wie in Beispiel 1 beschrieben verfahren.

Es resultierte ein grau-farbener, flexibler Weichschaum, welcher sich in der Bunsenbrennerflamme als nicht brennbar und vollständig tropfenfrei erwies. Beim Einwirken der Bunsenbrennerflamme auf den Weichschaum war an der Auftreffstelle eine deutliche Volumenzunahme zu beobachten, die gleichzeitig eine Verfestigung der Siliconmasse zur Folge hatte, wodurch ein Abtropfen unterbunden worden ist.

### Beispiel 3

10,00 g der in Beispiel 2 beschriebenen Vormischung 3 wurden mit 0,15 g Bis-(2-dimethylaminoethyl)ether (käuflich erhältlich unter der Bezeichnung "Jeffcat® ZF-20" von Huntsman Corp., D-Hamburg) als Katalysator, 0,15 g Emulgator (käuflich erhältlich unter der Bezeichnung Belsil® DMC 3071VP bei Wacker Chemie AG, D-München) sowie 0,5 g einer hydrophoben, hochdispersen Kieselsäure (käuflich erhältlich unter der Bezeichnung HDK® 2000 bei der Wacker Chemie AG, D-München) versetzt. Das so erhaltene Gemisch wurde zunächst mit einem schnelllaufenden KPG-Rührer zu einer homogenen Emulsion verarbeitet. Anschließend wurden 0,14 g Wasser schnell zugegeben und wieder durch einen schnelllaufenden KPG-Rührer zu einer homogenen Mischung emulgiert. Nach ca. 5 Sekunden setzte eine exotherme Reaktion mit Schaumentwicklung ein. Die Schaumbildung war nach weiteren ca. 20 Sekunden abgeschlossen, während die Wärmeentwicklung noch ca. 30 Sekunden anhielt. Es resultierte ein grau-farbener, flexibler Weichschaum, welcher sich in der Bunsenbrennerflamme als nicht brennbar und vollständig tropfenfrei erwies. Beim Einwirken der Bunsenbrennerflamme auf den Weichschaum war an der Auftreffstelle eine deutliche Volumenzunahme zu beobachten, die gleichzeitig eine Verfestigung der Siliconmasse zur Folge hatte, wodurch ein Abtropfen unterbunden worden ist.

## Patentansprüche

1. Verschäumbare Zubereitungen, die (A) Organopolysiloxan mit mindestens einer Isocyanatgruppe enthaltend Einheiten der Formel
RₐR¹_{b}(R²O)_{c}SiO_{4-a-b-c/2} (I),
wobei
R gleich oder verschieden sein kann und einen einwertigen, SiCgebundenen, gegebenenfalls substituierten Kohlenwasserstoffrest, der durch Sauerstoffatome unterbrochen sein kann, bedeutet,
R¹ gleich oder verschieden sein kann und einen Rest der Formel
-Y-A-C(O)-NH-Z-NCO II),
wobei
Y und Z unabhängig voneinander zweiwertige, gegebenenfalls substituierte Kohlenwasserstoffreste, die mit Heteroatomen unterbrochen sein können, bedeuten und
A die Bedeutung von -O- oder -NR³- hat mit R³ gleich Wasserstoffatom oder einwertiger gegebenenfalls substituierter Kohlenwasserstoffrest bedeutet,
R² gleich oder verschieden sein kann und einen einwertigen, gegebenenfalls substituierten Kohlenwasserstoffrest, der durch Heteroatome unterbrochen sein kann, bedeutet,
a 0, 1, 2 oder 3 ist,
b 0, 1, 2 oder 3 ist und
c 0, 1, 2 oder 3 ist,
mit der Maßgabe, dass die Summe a+b+c≤3 ist und mindestens eine Einheit mit b verschieden 0 anwesend ist,
und (B) Aufblätterungsgraphit enthalten.

2. Zubereitungen gemäß Anspruch 1, **dadurch gekennzeichnet, dass** sie Aufblätterungsgraphit (B) in Mengen von 0,1 bis 50 Gewichtsteilen, bezogen auf 100 Gewichtsteile Siloxan (A), enthalten.

3. Zubereitungen gemäß einem oder mehreren der Ansprüche 1 bis 2, **dadurch gekennzeichnet, dass** es sich um solche enthaltend
(A) Siloxane enthaltend Einheiten der Formel (I),
(B) Aufblätterungsgraphit,
gegebenenfalls
(C) Isocyanate,
gegebenenfalls
(D) Füllstoffe,
gegebenenfalls
(E) Emulgatoren,
gegebenenfalls
(F) physikalische Treibmittel,
gegebenenfalls
(G) Katalysatoren,
(H) chemische Treibmittel und
gegebenenfalls
(I) Additive
handelt.

4. Zubereitungen gemäß einem oder mehreren der Ansprüche 1 bis 3, **dadurch gekennzeichnet, dass** sie chemische Treibmittel (H) enthalten.

5. Zubereitungen gemäß Anspruch 4, **dadurch gekennzeichnet, dass** es sich bei dem chemischen Treibmittel (H) um Wasser handelt.

6. Verfahren zur Herstellung siliconhaltiger Polyurethanschäume, **dadurch gekennzeichnet, dass** Organopolysiloxan mit mindestens einer Isocyanatgruppe (A) gemäß Anspruch 1 mit Aufblätterungsgraphit (B) und chemischem Treibmittel (H) vermischt und reagieren gelassen wird.

7. Verfahren nach Anspruch 6, **dadurch gekennzeichnet, dass** Organopolysiloxan mit mindestens einer Isocyanatgruppe (A), Aufblätterungsgraphit (B), Katalysator (G) und chemisches Treibmittel (H) vermischt und reagieren gelassen werden.

8. Siliconhaltige Polyurethanschäume, die Aufblätterungsgraphit enthalten, herstellbar durch Umsetzung der Zubereitungen gemäß Anspruch 1.

9. Schäume gemäß Anspruch 8, **dadurch gekennzeichnet, dass** sie Aufblätterungsgraphit in Mengen von 0,05 bis 30 Gew.-%, bezogen auf das Gesamtgewicht des Schaumes, enthalten.

## Claims

1. Foamable compositions comprising (A) organopolysiloxane having at least one isocyanate group comprising units of the formula
RₐR¹_{b}(R₂O)_{c}SiO_{4-a-b-c/2} (I)
where
R can be identical or different and is a monovalent, SiC-bonded, optionally substituted hydrocarbon radical which may be interrupted by oxygen atoms,
R¹ can be identical or different and is a radical of the formula
-Y-A-C(O)-NH-Z-NCO (II)
where
Y and Z independently of one another are divalent, optionally substituted hydrocarbon radicals which may be interrupted by heteroatoms and
A has the definition of -O- or -NR³-, where R³ is a hydrogen atom or monovalent, optionally substituted hydrocarbon radical,
R² can be identical or different and is a monovalent, optionally substituted hydrocarbon radical which may be interrupted by heteoratoms,
a is 0, 1, 2 or 3,
b is 0, 1, 2 or 3, and
c is 0, 1, 2 or 3,
with the proviso that the sum a + b + c ≤ 3 and there is at least one unit with b other than 0 present,
and (B) expandable graphite.

2. Compositions according to Claim 1, **characterized in that** they comprise expandable graphite (B) in amounts from 0.1 to 50 parts by weight, based on 100 parts by weight of siloxane (A).

3. Compositions according to one or more of Claims 1 and 2, **characterized in that** they are those comprising
(A) siloxanes comprising units of the formula (I),
(B) expandable graphite,
optionally
(C) isocyanates,
optionally
(D) fillers,
optionally
(E) emulsifiers,
optionally
(F) physical blowing agents,
optionally
(G) catalysts,
(H) chemical blowing agents, and
optionally
(I) additives.

4. Compositions according to one or more of Claims 1 to 3, **characterized in that** they comprise chemical blowing agents (H).

5. Compositions according to Claim 4, **characterized in that** the chemical blowing agent (H) is water.

6. Process for preparing silicone-containing polyurethane foams, **characterized in that** organopolysiloxane having at least one isocyanate group (A) according to Claim 1 is mixed with expandable graphite (B) and chemical blowing agent (H) and caused to react.

7. Process according to Claim 6, **characterized in that** organopolysiloxane having at least one isocyanate group (A), expandable graphite (B), catalyst (G), and chemical blowing agent (H) are mixed and caused to react.

8. Silicone-containing polyurethane foams comprising expandable graphite and preparable by reacting the compositions according to Claim 1.

9. Foams according to Claim 8, **characterized in that** they comprise expandable graphite in amounts from 0.05% to 30% by weight, based on the total weight of the foam.

## Revendications

1. Préparations transformables en mousse, qui contiennent (A) un organopolysiloxane à motifs, contenant au moins un groupe isocyanate, de formule
RₐR¹_{b}(R²O)_{c}SiO_{4-a-b-c/2} (I),
dans laquelle
R peut être le même ou différent et représente un radical hydrocarboné monovalent éventuellement substitué, lié par une liaison SiC, qui peut être interrompu par des atomes d'oxygène,
R¹ peut être le même ou différent et représente un radical de formule
-Y-A-C(O)-NH-Z-NCO (II),
dans laquelle
Y et Z représentent indépendamment l'un de l'autre des radicaux hydrocarbonés divalents, éventuellement substitués, qui peuvent être interrompus par des hétéroatomes et
A a la signification de -O- ou -NR³- où R³ représente un atome d'hydrogène ou un radical hydrocarboné monovalent éventuellement substitué,
R² peut être le même ou différent et représente un radical hydrocarboné monovalent, éventuellement substitué, qui peut être interrompu par des hétéroatomes,
a est 0, 1, 2 ou 3,
b est 0, 1, 2 ou 3 et
c est 0, 1, 2 ou 3,
étant entendu que la somme a+b+c est ≤ 3 et au moins un motif où b est différent de 0 est présent,
et (B) du graphite exfolié.

2. Préparations selon la revendication 1, **caractérisées en ce qu'**elles contiennent du graphite exfolié (B) en quantités de 0,1 à 50 parties en poids, par rapport à 100 parties en poids de siloxane (A).

3. Préparations selon l'une ou plusieurs des revendications 1 et 2, **caractérisées en ce qu'**il s'agit de celles contenant
(A) des siloxanes contenant des motifs de formule (I),
(B) du graphite exfolié,
éventuellement
(C) des isocyanates,
éventuellement
(D) des charges,
éventuellement
(E) des émulsifiants,
éventuellement
(F) des agents d'expansion physiques,
éventuellement
(G) des catalyseurs,
(H) des agents d'expansion chimiques et éventuellement
(I) des additifs.

4. Préparations selon l'une ou plusieurs des revendications 1 à 3, **caractérisées en ce qu'**elles contiennent des agents d'expansion chimiques (H).

5. Préparations selon la revendication 4, **caractérisées en ce que** l'agent d'expansion chimique (H) consiste en de l'eau.

6. Procédé pour la production de mousses de polyuréthane siliconées, **caractérisé en ce qu'**on mélange et fait réagir un organopolysiloxane comportant au moins un groupe isocyanate (A) selon la revendication 1 avec du graphite exfolié (B) et un agent d'expansion chimique (H).

7. Procédé selon la revendication 6, **caractérisé en ce qu'**on mélange et fait réagir un organopolysiloxane comportant au moins un groupe isocyanate (A), du graphite exfolié (B), un catalyseur (G) et un agent d'expansion chimique (H).

8. Mousses de polyuréthane siliconées, qui contiennent du graphite exfolié, pouvant être produites par mise en réaction des préparations selon la revendication 1.

9. Mousses selon la revendication 8, **caractérisées en ce qu'**elles contiennent du graphite exfolié en quantités de 0,05 à 30 % en poids, par rapport au poids total de la mousse.
